# FASCICULE DE BREVET EUROPEEN

(11) **EP 0 894 316 B1**
(45) Date de publication et mention de la délivrance du brevet: **02.05.2002**
(21) Numéro de dépôt: 97901115.2
(22) Date de dépôt: 17.01.1997
(51) Int. Cl.: G08C 21/00, H04B 3/54

(54) **ARDOISE COMMUNICANTE**
KOMMUNIZIERENDER NOTIZBLOCK
ELECTRONIC COMMUNICATION NOTEPAD

(43) Date de publication de la demande: 03.02.1999
(73) Titulaire: Parienti, Raoul, 06000 Nice (FR); Frey, Pierre, 75116 Paris (FR)
(72) Inventeur: Parienti, Raoul, 06000 Nice (FR); Frey, Pierre, 75116 Paris (FR)
(74) Mandataire: Bonneau, Gérard
(86) Numéro de dépôt international: FR9700097
(87) Numéro de publication internationale: WO9726636

(56) Documents cités:
- EP-A- 0 515 168
- EP-A- 0 637 794
- DE-A- 3 701 321
- GB-A- 2 174 273
- GB-A- 2 188 819
- US-A- 3 876 984
- ELEKTRONIK, vol. 40, no. 5, 5 Mars 1991, MÜNCHEN,DE, pages 58-60, XP000219334 GOLDBACHER A: "EDV-CHINESISCH KOMMT AUS DER MODE"

## Description

L'invention concerne une ardoise communicante offrant un nouveau mode de communication graphique entre deux points fixes, quel que soit leur éloignement.

Si les progrès de l'électronique associés à ceux de l'informatique ont permis de créer des objets communicants de plus en plus performants, cependant, force est de constater qu'il n'existe pas à ce jour d'objets communicants qui permettent à un directeur en réunion ou un avocat en consultation de recevoir confidentiellement des messages de sa secrétaire dont le bureau est à quelques mètres, ou d'associés se trouvant à l'autre extrémité du pays, et qui, de plus, permettent à ce même directeur d'y répondre instantanément de façon totalement discrète.

L'invention présentée dans le présent brevet permet de remédier à tous ces inconvénients.

L'invention se présente sous la forme d'une petite ardoise constituée essentiellement d'un écran tactile, capable de communiquer avec d'autres ardoises identiques via le courant porteur localement, ou par une combinaison judicieuse de courant porteur et du réseau téléphonique commuté (RTC), pour des communications éloignées.

La technologie des écrans tactiles est déjà bien connue, elle trouve aujourd'hui un large développement dans des dispositifs mobiles plus particulièrement destinés à des usages d'« assistants électroniques personnels » ou de micro-ordinateurs miniatures.

La demande de brevet EP-A-0 515 168 décrit déjà un appareil capable de communiquer graphiquement sur de courtes distances de l'ordre de quelques centaines de mètres entre deux voitures, par exemple dont les occupants souhaitent transmettre un plan ou autre dessin, grâce à une liaison radio de type Citizen Band (CB), ou encore dans des lieux tels qu'aéroports, parkings ou à l'intérieur d'une même enceinte telles que salles de classe ou de conférence par des liaisons infrarouges.

L'utilisation d'ondes radio pose des problèmes administratifs non négligeables dès que l'on dépasse un certain seuil de puissance, fixé très bas.

Ainsi, l'appareil portatif mobile qui vient d'être décrit, reste essentiellement axé sur des applications ludiques et ne permet pas des communications longues distances et stables à l'instar d'un télécopieur ou d'un téléphone.

La présente invention permet de remédier à ces inconvénients. Elle se présente sous la forme d'un boîtier discret extra-plat posé préférentiellement à proximité du traditionnel téléphone; elle est connectée à une prise de courant alternatif du secteur.

La présente invention est par ailleurs très utile aux sourds ou malentendants.

L'ardoise communicante est destinée à fonctionner selon deux modes :
- le mode de proximité, dans lequel un ensemble d'ardoises toutes connectées au réseau de courant alternatif, à l'intérieur d'un même bâtiment, ou encore entre deux bâtiments voisins, utilise le courant porteur comme vecteur de communication;
- le mode éloigné, dans lequel le message est d'abord acheminé par courant porteur jusqu'à un boîtier aiguilleur connecté au réseau téléphonique, puis transmis via ce réseau vers un autre boîtier aiguilleur, qui va à son tour le réinjecter sur le courant porteur où est connecté le boîtier destinataire.
L'objet de l'invention sera mieux compris à la lecture de la description détaillée et en référence aux dessins.

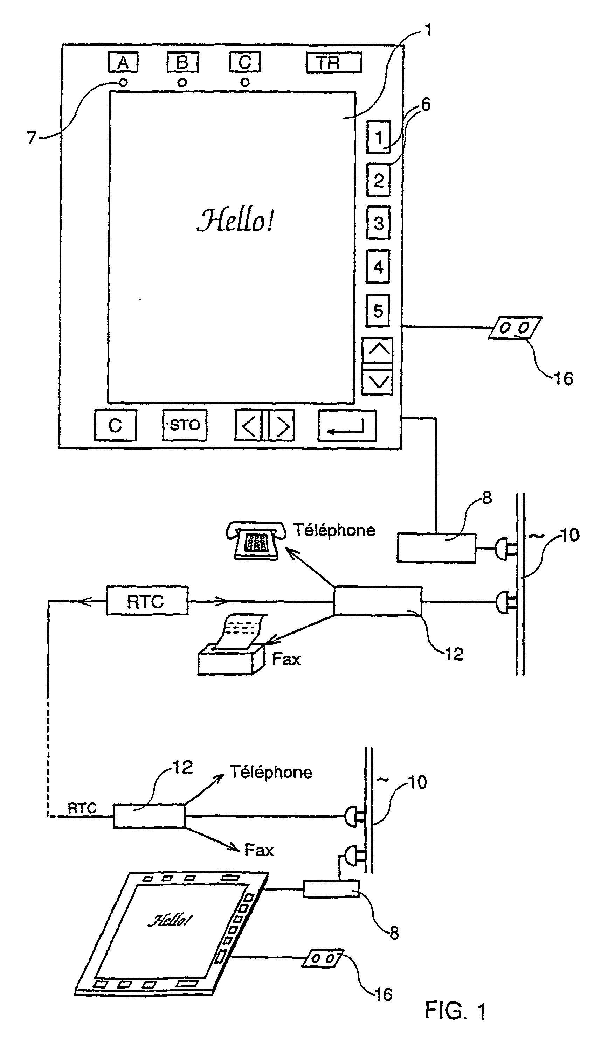

La figure 1 montre une vue d'ensemble de l'invention ramenée à deux ardoises éloignées en train de communiquer, avec les différents éléments permettant leur liaison : modem courant porteur, courant alternatif, boîtier aiguilleur, réseau téléphonique.

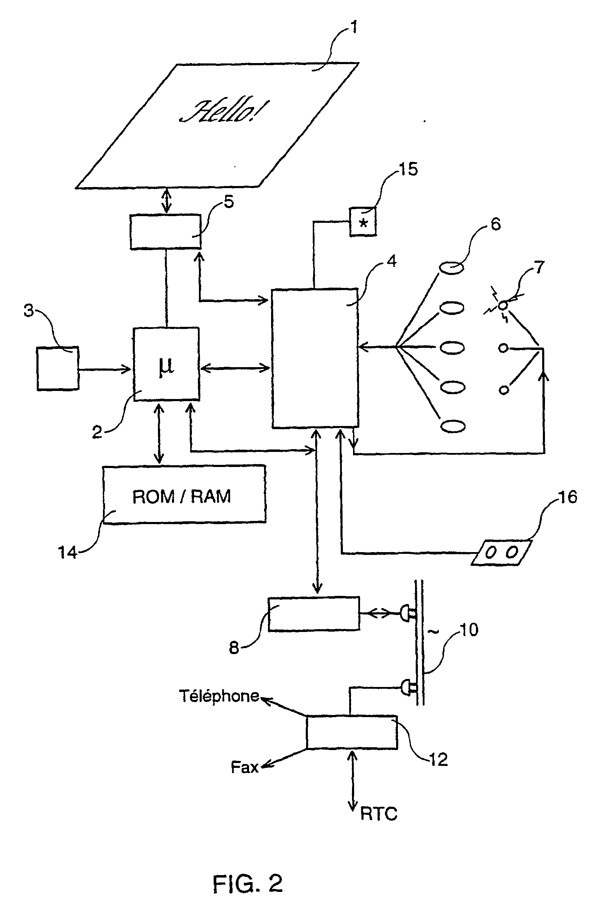

La figure 2 montre les sous-ensembles organiques de l'invention.

La figure 3 montre une application particulière de l'invention, où une ardoise communique directement avec un fax.

La figure 4 montre une ardoise connectée à une mini imprimante permettant de conserver une trace papier de certain message.

De plus, l'invention dispose d'une sortie permettant de connecter un jeu de contacteurs (16), deux par exemple, actionnables manuellement ou par le pied, afin de pouvoir apporter spontanément et très discrètement une réponse de type : « oui! » ou « non! » ou encore un message pré-programmé, à tout message qui vient de s'afficher sur l'écran, grâce à une manoeuvre codée des contacteurs (16). Par exemple: une pression du contacteur droit pour « oui », une pression du contacteur gauche pour « non », deux pressions successives du contacteur droit pour faire défiler les messages programmés dans un sens, deux pressions successives du contacteur gauche pour faire défiler les messages dans l'autre sens, une pression longue sur les deux contacteurs pour « envoyer », deux pressions successives sur les deux contacteurs pour « annuler ».

L'invention, constituée d'une pluralité d'ardoises, comporte en outre un boîtier aiguilleur (12), par site équipé. Un site représente une entreprise, un cabinet d'avocats, de médecins ou autre, un particulier, ou tout autre entité attachée à une même facturation téléphonique, et dont la topologie permet les communications par courant porteur sur le réseau du courant alternatif.

Le boîtier (12) remplit deux fonctions :
- il fait office de modem reliant le réseau téléphonique et le réseau alternatif,
- il permet de reconnaître la nature d'un appel rentrant (téléphone, fax, ou autre ardoise), en fonction de la signature acoustique s'y afférent.

Un appel rentrant destiné à une ardoise sera orienté vers le réseau courant alternatif (10). Un appel rentrant destiné au téléphone ou au fax, sera réorienté convenablement, le boîtier (12) pouvant générer un signal de sonnerie vers l'appareil destinataire de la communication.

Ainsi il est aisé d'établir des communications avec des ardoises éloignées, le boîtier (12) autorisant le transit des données entre le courant porteur local et le réseau téléphonique.

La fonction « aiguilleur » du boîtier (12), dispense d'installer une ligne téléphonique supplémentaire dédiée.

Inversement, le boîtier (12) est conçu pour reconnaître les messages circulant sur le courant porteur et destinés à être transmis par le réseau téléphonique vers une ardoise éloignée. Pour ce faire, le boîtier (12) intègre un microprocesseur, une mémoire et un logiciel ad hoc, filtre l'ensemble des données qui circulent sur le courant alternatif (10), afin d'identifier les messages destinés à être transmis par le réseau téléphonique, notamment, lorsqu'une adresse d'une ardoise destinataire d'un message comprend un numéro de téléphone. Le boîtier (12) compose alors ledit numéro, joignant ainsi le boîtier (12) du site récepteur du message, ce dernier boîtier (12), reconnaissant que l'appelant est une ardoise, va injecter les données sur le courant porteur du site destinataire. L'ardoise destinataire du message reconnaissant son adresse va alors enregistrer et afficher ledit message.

Pour un usage professionnel, il sera plus pratique de faire transiter les messages par un numéro de fax afin de n'utiliser qu'un seul numéro d'appel par établissement ou bureau. Dans un cadre toujours professionnel et pour plus de confort, l'adresse de l'ardoise peut être simplement le nom et le prénom du destinataire. Connaissant le numéro de fax de l'entreprise « X » et voulant joindre confidentiellement Monsieur « Pierre Martin », cela devient un jeu d'enfant
L'ardoise communicante comprend un écran tactile (1), un ensemble de touches (6) définies à titre d'exemple de la façon suivante :
- des touches A, B, C, caractérisant les boîtiers susceptibles de communiquer entre eux,
- des touches 1, 2, 3, 4, 5, permettant de rappeler un message pré-programmé,
- des touches de défilement telles que < > permettant de faire défiler les caractères alphanumériques afin de programmer des messages courts tels que : oui, non, je termine dans cinq minutes, faire patienter un instant.
Pour les messages affichant une durée, les touches < et > permettent de faire défiler la durée souhaitée.

L'ardoise communicante sera pourvue d'autres touches :
- une touche « TR » pour transférer le message,
- des touches A, B, C, associées à chaque ardoise communicante,
- des touches 1,2,3... rappelant les messages programmés.

La pression consécutive des touches « 1 » puis « TR » et enfin « C» permettra respectivement de rappeler le message programmé en 1 et de le transférer vers le boîtier C.

Un ensemble de diodes électroluminescentes destinées à s'éclairer pour signaler qu'une ardoise « familière » et dont le code identifiant a été programmé envoie un message. Chaque diode électroluminescente correspondant à une ardoise désignée par l'utilisateur.

Les messages se préparent selon deux modes :
- un mode écriture manuelle,
- un mode programmation.

Le mode écriture manuelle : l'utilisateur devra simplement écrire sur l'ardoise tactile communicante avec un stylet arrondi ou simplement en retournant un quelconque stylo. L'écran de l'ardoise tactile est composé d'un film souple et résistant, en polycarbonate ou équivalent, la pression du stylet sur le film provoque la stimulation successive des points de l'ardoise tactile (1) constituée d'une matrice MxN, adréssable pixel par pixel sous l'effet de la pression. Les pixels sont identifiés selon repérage X/Y classique du plan, et vont s'afficher sur l'écran.

L'écran peut également être de type analogique, un ensemble de capteurs solidaires des bords de l'ardoise sont ainsi capables d'apprécier la position du stylet exerçant une pression sur la surface de l'ardoise. Cette position est ensuite convertie en coordonnées X/Y.

L'ensemble des couples (x, y) adressés, est mémorisé dans une mémoire RAM (14), puis transmis sur le réseau du courant alternatif domestique par le modem courant porteur (8) après que l'utilisateur a pressé sur la touche de l'ardoise destinataire, qui peut se trouver, soit sur le même réseau courant porteur, soit sur un réseau éloigné via le boîtier aiguilleur (12) et le réseau téléphonique selon la procédure décrite ci-dessus. L'ardoise destinataire reçoit alors les données via son propre modem courant porteur (8) et va les gérer grâce à son microprocesseur (2) et à sa mémoire (14) puis les afficher sur l'écran de l'ardoise tactile (1). Si besoin est, une fois la communication établie entre deux ardoises, les messages peuvent être acheminés dans les deux sens aussi longtemps que nécessaire, notamment dans le cas où une réponse immédiate doit être apportée à un message qui vient de s'afficher.

Selon une version plus sophistiquée du mode écriture, un logiciel de reconnaissance de caractères est mémorisé dans la mémoire ROM (14) permettant de convertir l'ensemble des points stimulés par la pression du stylet, en caractères alphanumériques correspondant.
Le mode programmation : l'utilisateur va composer tout d'abord une liste de messages qu'il aura le plus souvent à formuler. La pression des touches < et > va faire défiler l'ensemble des caractères alphanumériques, lettres, ponctuations et chiffres. Chaque fois que le caractère souhaité s'affiche sur l'écran, l'utilisateur peut le saisir et le mémoriser afin de constituer l'ensemble des caractères du message. L'affichage d'un clavier alphanumérique complet est bien entendu possible, pour une saisie plus rapide, notamment, pour la programmation des numéros de code, ou des noms des destinataires, ainsi que pour la saisie des numéros de téléphones ou de fax correspondant aux sites destinataires.

Pour des raisons pratiques, l'installation comprendra préférentiellement une ardoise « maître » et des ardoises « esclaves » de sortes que les messages programmés en mode programmation se préparent sur une ardoise unique, l'ardoise « maître », lesdits messages sont mémorisés en mémoire RAM (14), puis transférés par le modem courant porteur (8) vers d'autres ardoises « esclaves », et mémorisés à l'identique dans la mémoire RAM (14) des ardoises « esclaves ».

Selon un mode de réalisation particulier, l'invention est constituée d'un écran tactile graphique (1), adressable pixel par pixel. Cet écran (1) est géré par un contrôleur (5) lui-même géré par un microprocesseur (2), ledit microprocesseur est cadencé par une horloge (3), et connecté à une mémoire ROM et RAM (14).

Un circuit logique (4) est connecté à l'ensemble des éléments périphériques tels que : les touches (6) et les diodes électroluminescentes (7), ainsi que le modem courant porteur (8). Ledit modem assure la transmission bidirectionnelle des données via le réseau alternatif domestique (10), ainsi que l'alimentation électrique de l'ardoise.

Selon un mode de fonctionnement particulier de l'ardoise communicante, lorsqu'un utilisateur d'une ardoise A souhaite envoyer un message vers une ardoise B, pré-programmée, il devra préparer son message selon l'un des deux modes décrits plus haut, appuyer sur la touche transmettre (TR), puis presser sur la touche du boîtier destinataire B. Les données sont interprétées par le contrôleur (5), puis gérées par le microprocesseur (2), puis mémorisées en RAM (14), le microprocesseur (2) va chercher en RAM (14) l'adresse électronique du boîtier destinataire (B). Une adresse constituée d'un mot de 8 bits par exemple, permet 2⁸= 256 possibilités.

Le message ainsi constitué comprend essentiellement l'adresse du boîtier destinataire, l'adresse du boîtier expéditeur et le message proprement dit. Ledit message est soit constitué d'une suite de caractères alphanumériques (ASCII), soit d'un ensemble de couples (x, y) définissant pour chacun un pixel ou un groupe de pixels connexes de l'écran.

Ces données sont acheminées vers le modem courant porteur (8), puis vers l'ensemble de tous les boîtiers connectés sur le réseau courant alternatif.

Si l'ardoise destinataire du message est connectée sur le même réseau courant alternatif par son propre modem courant porteur (8), cette dernière reconnaissant son adresse va réagir et enregistrer les données dans sa mémoire RAM (14), puis les afficher sur l'écran (1), noter l'adresse du boîtier expéditeur, provoquant le cas échéant l'allumage d'une diode (7), dans le cas où l'ardoise appelante est programmée à cet effet.

Si l'ardoise destinataire du message est éloignée, l'adresse de ladite ardoise va incorporer le numéro de téléphone ou de fax du lieu où elle est connectée.

Le boîtier aiguilleur (12) va analyser la nature de tout appel rentrant, si un appel est destiné à une ardoise, le boîtier aiguilleur (12) va injecter les données sur le secteur alternatif et on se retrouve dans la configuration précédente.

En cas de non réaction du boîtier destinataire après l'affichage du message, et dans un intervalle de temps défini, un avertisseur sonore et/ou visuel (15) va émettre un signal pour annoncer l'arrivée du message.

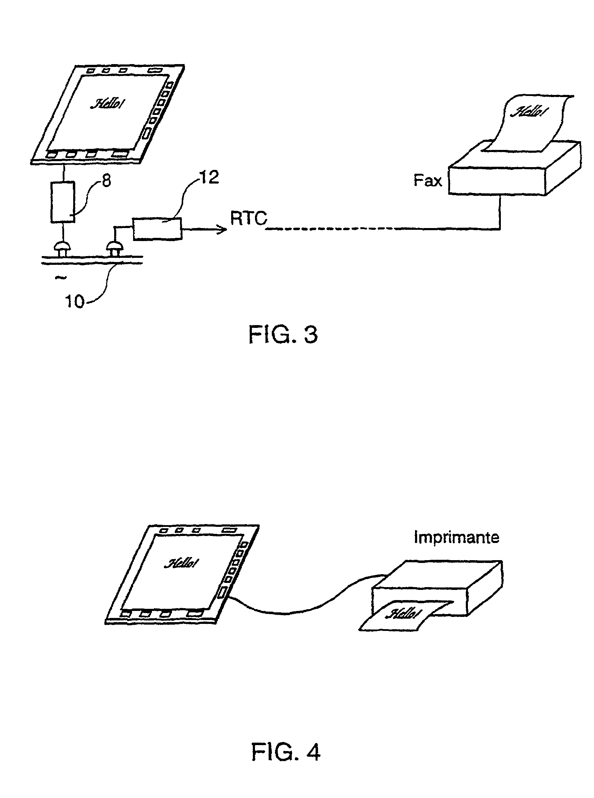

L'ardoise peut avantageusement être couplée à une mini imprimante (figure 4), ladite imprimante pouvant incorporer divers type de feuilles, par exemple des feuilles de petits format distribuées en rouleau de papier prédécoupé, des feuilles libres, ou encore en feuille disposées en accordéon. L'un des bords de la feuille étant préencollé, protégé par un ruban de papier ou non, afin que l'invention permette, outre les messages purement numériques, de générer des messages sur un support de type « post-it », à travers le monde.

Une option particulière de l'invention permet à toute ardoise communicante, de transmettre des messages vers un fax ordinaire, figure 3. Un logiciel mémorisé dans la mémoire (14) de l'ardoise émettrice, va simuler le protocole fax et va transmettre le message après l'avoir converti convenablement dans la norme fax.
Par ailleurs, l'ardoise communicante, peut être protégée momentanément par un code confidentiel introduit par son possesseur et mémorisé en RAM (14), de sorte que seule une personne connaissant ledit code peut communiquer un message vers l'ardoise protégée par un code.

Grâce an code de protection, les ardoises communicantes peuvent être mises à la disposition de visiteurs dans l'entreprise ou l'administration ou encore être fixées sur les portes extérieures de certains bureaux.

Par ailleurs, il est possible à une ardoise communiquante d'échanger des messages avec un ordinateur personnel, un boîtier accessoire intégrant un modem courant porteur et une électronique adaptée se connectant entre une sortie série de l'ordinateur et le secteur alternatif.
Les formes dimensions et dispositions des différents éléments, ainsi que les matières utilisées pour la fabrication, pourront varier dans la limite des équivalents, sans changer pour cela la conception générale de l'invention, qui vient d'être décrite.

## Revendications

1. Système de communication de messages entre des ardoises électroniques communicantes appartenant à au moins deux ensembles correspondant à différents sites dans lesquels chaque ardoise comprend un écran tactile (1) adressable pixel par pixel sous l'effet de la pression d'un stylet, un microprocesseur (2) capable de gérer des données associé à une mémoire ROM et une mémoire RAM (14), le stylet et un ensemble de touches permettant, en combinaison avec ledit stylet, de créer des messages graphiques et textuels, chaque ardoise d'un ensemble étant connectée au réseau de courant alternatif (10) au moyen d'un modem (8) ;
ledit système étant **caractérisé en ce que**, dans le but de permettre à une ardoise d'un premier ensemble d'échanger des messages avec une ardoise d'un deuxième ensemble, il comprend pour chaque ensemble un boîtier aiguilleur (12) interconnecté entre le réseau de courant alternatif et le réseau téléphonique, chaque boîtier aiguilleur comportant des moyens pour transmettre sur ledit réseau téléphonique un message provenant d'une ardoise dudit premier ensemble vers le boîtier dudit deuxième ensemble lorsque le message est destiné à une ardoise dudit deuxième ensemble.

2. Système de communication selon la revendication 1, dans lequel chaque message comprend l'adresse du boîtier aiguilleur (12) destinataire de façon à permettre auxdits moyens du boîtier aiguilleur expéditeur d'aiguiller le message vers ledit boîtier destinataire.

3. Système de communication selon la revendication 1 ou 2, dans lequel lesdits moyens du boîtier aiguilleur (12) permettant d'aiguiller un message comprennent en outre des moyens permettant de reconnaître la nature d'un appel rentrant.

4. Système de communication selon l'une des revendications 1, 2 ou 3 dans lequel chaque boîtier aiguilleur (12) intègre un microprocesseur, une mémoire et un logiciel ad hoc, afin de filtrer l'ensemble des données qui circulent sur le réseau de courant alternatif (10), pour identifier les messages destinés à être transmis sur le réseau téléphonique.

5. Système de communication selon l'une des revendications 1 à 4, dans lequel lesdits moyens du boîtier aiguilleur (12) permettant d'aiguiller un message composent un numéro de téléphone lorsqu'une adresse d'une ardoise destinataire d'un message comprend un tel numéro, joignant ainsi le boîtier du site récepteur du message.

6. Système de communication selon l'une des revendications 1 à 5, dans lequel chaque ardoise comprend une diode (7) qui s'allume lorsque ladite ardoise reçoit un message.

7. Système de communication selon l'une des revendications 1 à 6, dans lequel chaque ardoise comprend en outre un jeu de contacteurs (16) actionnables manuellement ou par le pied, permettant d'apporter une réponse discrète et instantanée de type « oui » ou « non », ou de choisir un message pré-programmé, à tout message arrivant.

8. Système de communication selon l'une des revendications 1 à 7, dans lequel chaque boîtier aiguilleur (12) fait office de modem entre le réseau de courant alternatif (10) et ledit réseau téléphonique.

9. Système de communication selon l'une des revendications 1 à 8, dans lequel chaque ardoise est dotée d'un logiciel capable de simuler le protocole d'un fax, afin de transmettre un message directement vers un fax.

10. Système de communication selon l'une des revendications 1 à 9, dans lequel chaque ardoise peut être couplée à une micro imprimante pouvant incorporer des feuilles, en rouleau de papier prédécoupé, des feuilles libres, ou disposées en accordéon, l'un des bords de chaque feuille étant préencollé, protégé par un ruban de papier ou non.

## Claims

1. A system of messages communication between electronic communication notepads belonging to at least two sets corresponding to different sites in which each notepad comprises a touch-sensitive screen (1) addressable pixel by pixel by means of a stylus, and a data management microprocessor linked to a ROM and RAM memory, the stylus and a set of keys being used, in combination with the stylus, to create graphic and text messages, each notepad of a set being connected the alternating current network (10 by means of a modem (8);
said system being **characterized in that**, in order to enable a notepad of a first set to exchange messages with a notepad of a second set, it comprises for each set a switching unit (12) interconnected between the alternating current network and the telephone network, each switching unit comprising means for transmitting on said telephone network a message coming from a notepad of said first set to the unit of said second set when the message is addressed to a notepad of said second set.

2. The communication system according to Claim 1, in which each message comprises the address of the addressee switching unit (12) in order to enable said means of the forwarding switching unit to properly direct the message towards the addressee unit.

3. The communication system according to claim 1 or 2, in which said means of the switching unit (12) enabling to properly direct the message comprise further means for enabling to identify the nature of incoming calls.

4. The communication system according to claim 1 to 3, in which the switching unit (12) has a CPU, a memory and appropriate software for filtering the whole data carried by the alternating current (10) so that the messages to be sent through the telephone network can be identified.

5. The communication system according to claim 1 to 4, in which said means of the switching unit (12) enabling to properly direct the message dial a telephone number when the address of an addressee notepad includes such a number, thereby establishing a link with the unit (12) from the site that is to receive the message.

6. The communication system according to claim 1 to 5, in which each notepad comprises a LED (7) which lights when said notepad receives a message.

7. The communication system according to claim 1 to 6, in which each notepad comprises further a set of hand- or foot-operated switches (16), for answering spontaneously and discreetly any incoming message by means of a "Yes" or "No" reply or a pre coded message.

8. The communication system according to claim 1 to 7, in which the switching unit (12) plays the role of a modem between the alternating current network (10) and said telephone network.

9. The communication system according to claim 1 to 8, in which each notepad contains a software program able to simulate a fax protocol for sending a message direct to a fax machine.

10. The communication system according to claim 1 to 9, in which each notepad can be connected to a mini-printer that can take sheets from pre-cut paper rolls, cut sheets, or fanfold paper, one side of each sheet being pre pasted, whether or not this area is protected with a paper tape.

## Patentansprüche

1. System zur Übermittlung von Mitteilungen zwischen kommunizierenden elektronischen Notizblöcken, die zu mindestens zwei Einheiten gehören, die verschiedenen Standorten entsprechen und in denen jeder Notizblock einen Tastbildschirm (1), der unter der Wirkung des Drucks eines Griffels Pixel für Pixel adressierbar ist, einen Mikroprozessor (2), der Daten verwalten kann und dem ein ROM-Speicher und ein RAM-Speicher (14) zugeordnet sind, den Griffel und eine Tasteneinheit aufweist, die in Kombination mit dem Griffel die Erzeugung von Graphik- und Textmitteilungen gestattet, wobei jeder Notizblock einer Einheit über ein Modem (8) mit dem Wechselstromnetz (10) verbunden ist,
wobei dieses System **dadurch gekennzeichnet ist, dass** es, um einem Notizblock einer ersten Einheit den Austausch von Mitteilungen mit einem Notizblock einer zweiten Einheit zu gestatten, für jede Einheit einen Weichenkasten (12) aufweist, der zwischen das Wechselstromnetz und das Fernsprechnetz geschaltet ist, wobei jeder Weichenkasten Mittel aufweist, um auf diesem Fernsprechnetz eine von einem Notizblock der ersten Einheit kommende Mitteilung zu dem Kasten dieser zweiten Einheit zu übertragen, wenn die Mitteilung für einen Notizblock dieser zweiten Einheit bestimmt ist.

2. Übermittlungssystem nach Anspruch 1, bei dem jede Mitteilung die Adresse des Ziel-Weichenkastens (12) enthält, so dass die Mittel des sendenden Weichenkastens diese Mitteilung diesem Ziel-Kasten zuleiten können.

3. Übermittlungssystem nach Anspruch 1 oder 2, bei dem die die Durchleitung einer Mitteilung gestattenden Mittel des Weichenkastens (12) außerdem Mittel aufweisen, die das Erkennen der Art eines eingehenden Rufs gestatten.

4. Übermittlungssystem nach einem der Ansprüche 1, 2 oder 3, bei dem in jeden Weichenkasten (12) ein Mikroprozessor, ein Speicher und eine ad-hoc-Software integriert ist, um alle auf dem Wechselstromnetz (10) zirkulierenden Daten zu filtern, um die Mitteilungen zu identifizieren, die zur Übertragung auf dem Fernsprechnetz bestimmt sind.

5. Übermittlungssystem nach einem der Ansprüche 1 bis 4, bei dem die die Durchleitung einer Mitteilung gestattenden Mittel des Weichenkastens (12) eine Fernsprechnummer wählen, wenn eine Adresse eines Ziel-Notizblocks einer Mitteilung eine solche Nummer besitzt, und auf diese Weise eine Verbindung mit dem Empfängerstandort der Mitteilung herstellen.

6. Übermittlungssystem nach einem der Ansprüche 1 bis 5, bei dem jeder Notizblock eine Diode (7) aufweist, die aufleuchtet, wenn der Notizblock eine Mitteilung empfängt.

7. Übermittlungssystem nach einem der Ansprüche 1 bis 6, bei dem jeder Notizblock außerdem einen Satz von manuell oder mit dem Fuß betätigbaren Schaltern (16) aufweist, die die Erstellung einer diskreten und augenblicklichen Antwort vom Typ "ja" oder "nein" oder die Wahl einer vorprogrammierten Mitteilung auf jede ankommende Mitteilung hin gestatten.

8. Übermittlungssystem nach einem der Ansprüche 1 bis 7, bei dem jeder Weichenkasten (12) als Modem zwischen dem Wechselstromnetz (10) und dem Fernsprechnetz dient.

9. Übermittlungssystem nach einem der Ansprüche 1 bis 8, bei dem jeder Notizblock mit einer Software ausgestattet ist, die das Protokoll eines Fax simulieren kann, um eine Mitteilung direkt auf ein Fax zu übertragen.

10. Übermittlungssystem nach einem der Ansprüche 1 bis 9, bei dem jeder Notizblock mit einem Mikrodrucker gekoppelt sein kann, der Blätter in Form einer Rolle von vorgestanztem Papier, einzelne Blätter oder ziehharmonikaartig angeordnete Blätter enthalten kann, wobei einer der Ränder jedes Blatts vorgummiert und durch einen Papierstreifen geschützt oder nicht geschützt ist.
